# EUROPEAN PATENT APPLICATION

(11) **EP 4 297 122 A1**
(43) Date of publication of application: **27.12.2023**
(21) Application number: 22780036.4
(22) Date of filing: 14.03.2022
(51) Int. Cl.: H01M 4/131, H01M 4/136, H01M 4/36, H01M 4/505, H01M 4/525, H01M 4/58, H01G 11/06, H01G 11/30, H01M 10/052

(54) **POSITIVE ELECTRODE ACTIVE MATERIAL FOR NONAQUEOUS ELECTROLYTE POWER STORAGE ELEMENTS, POSITIVE ELECTRODE FOR NONAQUEOUS ELECTROLYTE POWER STORAGE ELEMENTS, NONAQUEOUS ELECTROLYTE POWER STORAGE ELEMENT, POWER STORAGE UNIT, AND POWER STORAGE DEVICE**

(30) Priority: 01.04.2021 JP 2021063050
(71) Applicant: GS Yuasa International Ltd., Kisshoin, Minami-ku, Kyoto-shi, Kyoto 601-8520 (JP)
(72) Inventor: ENDO, Daisuke, Kyoto-shi, Kyoto 601-8520 (JP)
(74) Representative: Isarpatent
(86) International application number: PCT/JP2022/011274
(87) International publication number: WO 2022/209815

(57) **Abstract**

A positive active material for a nonaqueous electrolyte energy storage device according to one aspect of the present invention contains a lithium transition metal compound having a polyanion structure and represented by a general formula LiMPO₄ (M is one or more elements selected from Fe, Mn, Ni, and Co) or Li₃V₂(PO₄)₃, and a lithium transition metal composite oxide having an α-NaFeO₂ type crystal structure and represented by a general formula Li_{1+α}Me_{1-α}O₂ (0 < α, Me is Ni and Mn, or a transition metal element including Ni, Mn, and Co), the lithium transition metal composite oxide having a molar ratio of Mn to the transition metal (Me) of 0.4 ≤ Mn/Me ≤ 0.6.

## Description

### TECHNICAL FIELD

The present invention relates to a positive active material for a nonaqueous electrolyte energy storage device, a positive electrode for a nonaqueous electrolyte energy storage device, a nonaqueous electrolyte energy storage device, an energy storage unit, and an energy storage apparatus.

### BACKGROUND ART

In recent years, a transition metal compound having a polyanion structure has attracted attention as a positive active material used for a nonaqueous electrolyte energy storage device such as a nonaqueous electrolyte secondary battery. Since this transition metal compound having a polyanion structure forms a polyanion structure by covalently bonding oxygen to an element other than a transition metal, it is known that oxygen is not released even at a relatively high temperature, and safety of the energy storage device is enhanced by using the transition metal compound as a positive active material.

An invention is known in which a transition metal compound having a polyanion structure is mixed with a lithium-excess-type lithium transition metal composite oxide to obtain a positive active material (see Patent Document 1).

Patent Document 1 describes that "A dual-active Li_{1.2}Mn_{0.54}Ni_{0.13}Co_{0.13}O₂/LiFePO₄ nano-occluded cathode material was obtained through a combustion synthesis pathway. A stoichiometric mass of each of the acetates Li(COOCH₃)₂ · 2H₂O, Mn(COOCH₃)₂ · 4H₂O, Ni(COOCH₃)₂ · 4H₂O and Co(COOCH₃)₂ · 4H₂O were dissolved in deionized water to form a solution. Citric acid (C₆H₈O₇) as fuel was added to the solution and the pH of the solution was adjusted to 2 with the addition of the citric acid. Thereafter, LiFePO₄ powder was added to the solution in a molar ratio of Li_{1.2}Mn_{0.54}Ni_{0.13}Co_{0.13}O₂:LiFePO₄ of about 1: 0.05. The LiFePO₄ provides oxygen atoms that have stronger bonds than those of Li_{1.2}Mn_{0.54}Ni_{0.13}Co_{0.13}O₂." (paragraph [0047]).

In addition, an invention is well known in which a LiMeO₂ (Me represents a transition metal containing Ni, Co, and Mn) type lithium transition metal composite oxide (referred to as "NCM" or "NMC") is mixed with a transition metal compound having a polyanion structure to obtain a positive active material (see, for example, Patent Documents 2 to 4).

Patent Document 2 describes that "Layered lithium nickel manganese cobalt composite oxide (NMC) and olivine lithium iron phosphate (LFP) as positive active materials were mixed with a predetermined weight ratio (NMC/LFP) of the active materials. A scale-like graphite (average particle diameter: 20 µm) as a conducting material and polyvinylidene fluoride as a binding material were sequentially added into this mixture of positive active materials and then mixed, thereby obtaining a mixture of positive electrode materials." (paragraph[0141]).

Patent Document 3 describes that "<Example 1>... A binder (PVDF) was added to the resulting carbon-coated LiFePO₄ (Compound A) to obtain a LiFePO₄: carbon coat: PVDF mass ratio of 88: 2: 10, and this was then pulverized and mixed uniformly in a bead mill using NMP as the dispersion medium to obtain a positive composite in the form of a slurry with a solids content (NV) of 40 mass %. LiNi_{1/3}Mm_{1/3}Co_{1/3}O₂ (Compound B) with an average particle size of 1 µm was added to this positive composite to a mass ratio A: B of 90: 10 of Compound A to Compound B, and the two were mixed thoroughly." (paragraph [0049]), "The battery of Example 5 was obtained as in Example 1 except that LiNi_{1/3}Mm_{1/3}Co_{1/3}O₂ with an average particle size of 10 µm was used." (paragraph [0052]), "The battery of Example 7 was obtained as in Example 3 except that LiNi_{1/3}Mm_{1/3}Co_{1/3}O₂ with an average particle size of 10 µm was used.", and "The battery of Example 8 was obtained as in Example 4 except that LiNi_{1/3}Mm_{1/3}Co_{1/3}O₂ with an average particle size of 10 µm was used." (paragraph [0053]).

Patent Document 4 discloses that "LiFePO₄ (LFP) powder as the positive active material prepared according to Preparation Example 1 and LiNi_{0.6}Co_{0.2}Mn_{0.2}O₂ (hereinafter referred to as 'NCM') powder as the positive active material prepared according to Preparation Example 3 were mixed at a specified ratio and pressed to prepare pellets." (paragraph[0077]).

### PRIOR ART DOCUMENT

### PATENT DOCUMENTS

Patent Document 1: JP-W-2020-527832
Patent Document 2: JP-B-6065901
Patent Document 3: JP-B-5081886
Patent Document 4: JP-B-6236197

### SUMMARY OF THE INVENTION

### PROBLEMS TO BE SOLVED BY THE INVENTION

An object of the present invention is to provide a nonaqueous electrolyte energy storage device, an energy storage unit, and an energy storage apparatus which have high power performance at a low state of charge (SOC) after charge-discharge cycles.

### MEANS FOR SOLVING THE PROBLEMS

A positive active material for a nonaqueous electrolyte energy storage device according to one aspect of the present invention contains a lithium transition metal compound having a polyanion structure and represented by a general formula LiMPO₄ (M is one or more elements selected from Fe, Mn, Ni, and Co) or Li₃V₂(PO₄)₃, and a lithium transition metal composite oxide having an α-NaFeO₂ type crystal structure and represented by a general formula Li_{1+α}Me_{1-α}O₂ (0 < α, Me is Ni and Mn, or a transition metal element including Ni, Mn, and Co), the lithium transition metal composite oxide having a molar ratio of Mn to the transition metal (Me) of 0.4 ≤ Mn/Me ≤ 0.6.

A positive electrode for a nonaqueous electrolyte energy storage device according to another aspect of the present invention includes the positive active material.

A nonaqueous electrolyte energy storage device according to still another aspect of the present invention includes the positive electrode.

An energy storage unit according to still another aspect of the present invention is formed by connecting in series a plurality of the nonaqueous electrolyte energy storage devices connected in series.

An energy storage apparatus according to still another aspect of the present invention is formed by connecting a plurality of the energy storage units connected to each other.

### ADVANTAGES OF THE INVENTION

When the positive active material for a nonaqueous electrolyte energy storage device according to one aspect of the present invention is used for a positive electrode, it is possible to provide a nonaqueous electrolyte energy storage device, an energy storage unit, and an energy storage apparatus which have high power performance at a low SOC after charge-discharge cycles.

### BRIEF DESCRIPTION OF THE DRAWINGS

Fig. 1A is a schematic view showing a change in positive electrode potential with respect to an amount of charge (Q) of a nonaqueous electrolyte secondary battery using only LiFePO₄ (LFP) as a positive active material.
Fig. 1B is a schematic view showing a change in positive electrode potential with respect to an amount of charge (Q) of a nonaqueous electrolyte secondary battery using a mixture of LiFePO₄ (LFP) and Li, Ni, Co, Mn composite oxide (NCM) as a positive active material.
Fig. 2 is a see-through perspective view illustrating an embodiment of a nonaqueous electrolyte energy storage device.
Fig. 3 is a schematic diagram illustrating an embodiment of an energy storage apparatus configured by assembling a plurality of nonaqueous electrolyte energy storage devices.

### MODE FOR CARRYING OUT THE INVENTION

First, outlines of a positive active material for a nonaqueous electrolyte energy storage device, a positive electrode for a nonaqueous electrolyte energy storage device, a nonaqueous electrolyte energy storage device, an energy storage unit, and an energy storage apparatus disclosed in the present specification will be described.

A positive active material for a nonaqueous electrolyte energy storage device according to one aspect of the present invention contains a lithium transition metal compound having a polyanion structure and represented by a general formula LiMPO₄ (M is one or more elements selected from Fe, Mn, Ni, and Co) or Li₃V₂(PO₄)₃, and a lithium transition metal composite oxide having an α-NaFeO₂ type crystal structure and represented by a general formula Li_{1+α}Me_{1-α}O₂ (0 < α, Me is Ni and Mn, or a transition metal element including Ni, Mn, and Co), the lithium transition metal composite oxide having a molar ratio of Mn to the transition metal (Me) of 0.4 ≤ Mn/Me ≤ 0.6.

According to this positive active material, it is possible to provide a positive electrode for a nonaqueous electrolyte energy storage device and a nonaqueous electrolyte energy storage device which have high power performance at a low SOC after charge-discharge cycles.

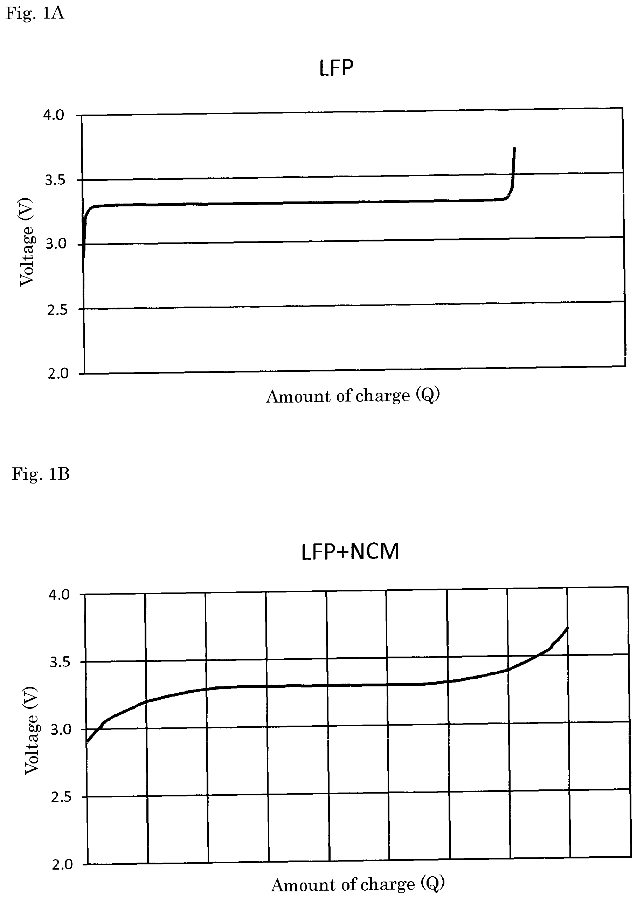

By using a positive active material in which a LiMeO₂ (Me is a transition metal element including Ni, Co, and Mn) type lithium transition metal composite oxide (NCM) is mixed with a lithium transition metal compound having a polyanion structure (for example, LiFePO₄: LFP) (see Patent Documents 2 to 4), a capacity derived from NCM appears in a positive electrode potential range of 3.5 V (vs. Li/Li⁺) or more and 3.7 V (vs. Li/Li⁺) or less, a potential change with respect to an amount of charge shows a gradient, and a rapid potential rise seen when only a lithium transition metal compound having a polyanion structure is used as a positive active material can be suppressed (see Figs. 1A and 1B).

However, when such a positive active material is used, NCM is mainly used at a low SOC during normal use of the nonaqueous electrolyte energy storage device, and thus resistance is likely to increase due to cracking of NCM particles as a charge-discharge cycle progresses. Therefore, the present inventor has studied mixing a lithium transition metal composite oxide having an α-NaFeO₂-type crystal structure and represented by the general formula Li_{1+α}Me_{1-α}O₂ (0 < α, Me is Ni and Mn, or a transition metal element including Ni, Mn, and Co, 0.4 ≤ Mn/Me ≤ 0.6) and exhibits capacity in a potential range similar to that of NCM with a lithium transition metal compound having a polyanion structure such as LFP and represented by the general formula LiMPO₄ (M is one or more elements selected from Fe, Mn, Ni, and Co) or Li₃V₂(PO₄)₃, and has found that it is possible to suppress an increase in resistance due to cracking of particles of the lithium transition metal composite oxide and to enhance power performance at a low SOC after charge-discharge cycles.

When a positive electrode including the lithium transition metal compound having a polyanion structure and represented by the general formula LiMPO₄ (M is one or more elements selected from Fe, Mn, Ni, and Co) or Li₃V₂(PO₄)₃ as a positive active material is charged so that a positive electrode potential reaches 3.7 V (vs. Li/Li⁺), a region where a potential change with respect to an amount of charge is relatively flat may be observed within a positive electrode potential range of 3.2 V (vs. Li/Li⁺) or more and less than 3.4 V (vs. Li/Li⁺).

When the lithium transition metal compound having a polyanion structure is used in combination with the lithium transition metal composite oxide to obtain a positive active material, a capacity derived from the lithium transition metal composite oxide can be effectively exhibited in a positive electrode potential range of 3.5 V (vs. Li/Li⁺) or more and 3.7 V (vs. Li/Li⁺) or less.

According to the lithium transition metal compound having a polyanion structure, when the positive electrode including this lithium transition metal compound as a positive active material is charged so that the positive electrode potential reaches 3.7 V (vs. Li/Li⁺), a region where a potential change with respect to an amount of charge is relatively flat can be observed within a positive electrode potential range of 3.2 V (vs. Li/Li⁺) or more and less than 3.4 V (vs. Li/Li⁺).

In the lithium transition metal composite oxide, a molar ratio (1 + α)/(1 - α) of Li to the transition metal (Me) may be 1.1 ≤ (1 + α)/(1 - α), or (1 + α)/(1 - α) ≤ 1.3.

When the lithium transition metal composite oxide is used, the capacity derived from the lithium transition metal composite oxide can be effectively exhibited in a positive electrode potential range of 3.5 V (vs. Li/Li⁺) or more and 3.7 V (vs. Li/Li⁺) or less, and cracking of particles of the lithium transition metal composite oxide with progress of a charge-discharge cycle is suppressed. In particular, even in a state where the lithium transition metal composite oxide is used in a high temperature environment for a long period of time and has been deteriorated to some extent, the power performance at a low SOC is enhanced.

The ratio of the lithium transition metal composite oxide in the positive active material may be 20% by mass or less.

According to this positive active material, since the ratio of the lithium transition metal compound having a polyanion structure is large, thermal stability can be enhanced using this.

A positive electrode for a nonaqueous electrolyte energy storage device according to another aspect of the present invention contains the positive active material, and a nonaqueous electrolyte energy storage device according to still another aspect of the present invention includes the positive electrode.

When the positive electrode included in the nonaqueous electrolyte energy storage device is charged so that a positive electrode potential reaches 3.7 V (vs. Li/Li⁺), a region where a potential change with respect to an amount of charge is relatively flat may be observed within a positive electrode potential range of 3.2 V (vs. Li/Li⁺) or more and 3.7 V (vs. Li/Li⁺) or less.

According to this nonaqueous electrolyte energy storage device, the capacity derived from the lithium transition metal composite oxide is effectively exhibited within a positive electrode potential range of 3.5 V (vs. Li/Li⁺) or more and 3.7 V (vs. Li/Li⁺) or less, and it is possible to suppress a rapid voltage rise observed when only the lithium transition metal compound having a polyanion structure is used as the positive active material.

The nonaqueous electrolyte energy storage device may be used at a voltage at which a maximum achieved potential of the positive electrode in a full charge state (SOC 100%) is 3.7 V (vs. Li/Li⁺) or less.

An energy storage unit according to still another aspect of the present invention is formed by connecting in series a plurality of the nonaqueous electrolyte energy storage devices connected in series.

According to this energy storage unit, it is possible to obtain an energy storage unit in which a rapid voltage rise at the end of charge is suppressed and occurrence of voltage variations in the plurality of nonaqueous electrolyte energy storage devices is suppressed.

An energy storage apparatus according to still another aspect of the present invention is formed by connecting a plurality of the energy storage units connected to each other.

According to this energy storage apparatus, it is possible to obtain an energy storage apparatus in which a rapid voltage rise at the end of charge is suppressed and occurrence of voltage variation in the plurality of nonaqueous electrolyte energy storage devices and energy storage unit is suppressed.

The configuration of a nonaqueous electrolyte energy storage device, the configuration of an energy storage unit, the configuration of an energy storage apparatus, and a method for manufacturing the nonaqueous electrolyte energy storage device according to an embodiment of the present invention (hereinafter, referred to as "the present embodiment".), and other embodiments will be described in detail. The names of the respective constituent members (respective constituent elements) for use in the respective embodiments may be different from the names of the respective constituent members (respective elements) for use in the background art.

### <Configuration of nonaqueous electrolyte energy storage device>

A nonaqueous electrolyte energy storage device according to the embodiment (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state of being contained in the positive electrode, the negative electrode, and the separator. A nonaqueous electrolyte secondary battery (hereinafter, also simply referred to as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H4160 (2006).

The average thickness of the positive substrate is preferably 3 µm or more and 50 µm or less, more preferably 5 µm or more and 40 µm or less, still more preferably 8 µm or more and 30 µm or less, particularly preferably 10 µm or more and 25 µm or less. When the average thickness of the positive substrate is within the above-described range, it is possible to enhance the energy density per volume of a secondary battery while increasing the strength of the positive substrate.

The intermediate layer is a layer arranged between the positive substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder (binding agent), a thickener, a filler, or the like as necessary.

In the present embodiment, the positive active material contains a lithium transition metal compound having a polyanion structure and represented by the general formula LiMPO₄ (M is one or more elements selected from Fe, Mn, Ni, and Co) or Li₃V₂(PO₄)₃. Examples of the lithium transition metal compound having a polyanion structure and represented by the general formula LiMPO₄ (M is one or more elements selected from Fe, Mn, Ni, and Co) include LiFePO₄, LiMnPO₄, LiNiPO₄, and LiCoPO₄ in which M is specifically one element selected from Fe, Mn, Ni, and Co, LiFeₓMn₁₋ₓPO₄ (0 < x < 1) and LiFe_{y}M_{1-y}PO₄ (M is one or more transition metal elements selected from Mn, Ni, and Co, 0.5 ≤ y < 1) in which M is two or more elements, and the like.

The lithium transition metal compound having a polyanion structure and represented by the general formula LiMPO₄ (M is one or more elements selected from Fe, Mn, Ni, and Co) or Li₃V₂(PO₄)₃ may be carbon-coated. The carbon-coated lithium transition metal compound having a polyanion structure is preferably prepared by mixing a raw material of a transition metal compound containing Fe, Mn, Ni, Co, V or the like with a phosphate of Li such as LiH₂PO₄ and a carbon raw material such as sucrose powder, and firing the mixture. The ratio of BET specific surface area increased by carbon coating of the lithium transition metal compound having a polyanion structure to the BET specific surface area of the positive composite can be set to 12% or more and 30% or less by controlling the type of the carbon raw material, mixing amount of the carbon raw material, firing temperature, firing time, and the like at the time of firing. For example, in the case of preparing LiFePO₄, it is preferable to set the firing temperature to 650°C to 700°C and the firing time to 2 to 12 hours.

In the present embodiment, the positive active material contains a lithium transition metal composite oxide having an α-NaFeO₂-type crystal structure and represented by the general formula Li_{1+α}Me_{1-α}O₂ (0 < α, Me is Ni and Mn, or a transition metal element including Ni, Mn, and Co, 0.4 ≤ Mn/Me ≤ 0.6), together with a lithium transition metal compound having a polyanion structure and represented by the general formula LiMPO₄ (M is one or more elements selected from Fe, Mn, Ni, and Co) or Li₃V₂(PO₄)₃.

When the lithium transition metal composite oxide is mixed with a lithium transition metal compound having a polyanion structure, the capacity derived from the lithium transition metal composite oxide is exhibited in a positive electrode potential range of 3.5 V (vs. Li/Li⁺) or more and 3.7 V (vs. Li/Li⁺) or less, and cracking of particles of the lithium transition metal composite oxide with progress of a charge-discharge cycle is suppressed.

In the lithium transition metal composite oxide having an α-NaFeO₂-type crystal structure and represented by the general formula Li_{1+α}Me_{1-α}O₂ (0 < α, Me is Ni and Mn, or a transition metal element including Ni, Mn, and Co, 0.4 ≤ Mn/Me ≤ 0.6), it is preferable that an X-ray diffraction pattern using a CuKα ray can be attributed to a crystal structure model of a space group R3-m, a full width at half maximum F (104) of a diffraction peak (diffraction peak at 2θ = 44° ± 1°) attributed to (104) plane is in a range of 0.15° to 0.35°, and a full width at half maximum F (003) of a diffraction peak (diffraction peak at 2θ = 18.6° ± 1°) attributed to (003) plane is in a range of 0.15° to 0.40°.

In the present embodiment, a positive active material other than the lithium transition metal compound having a polyanion structure and the lithium transition metal composite oxide may be contained as long as the power performance at a low SOC after charge-discharge cycles of the nonaqueous electrolyte energy storage device, which is a problem of the positive active material for a nonaqueous electrolyte energy storage device according to one aspect of the present invention, is not impaired.

Examples of other positive active material include lithium transition metal compounds having a polyanion structure other than the lithium transition metal compound, lithium transition metal composite oxides having an α-NaFeO₂-type crystal structure other than the lithium transition metal composite oxide, lithium transition metal composite oxides having a spinel-type crystal structure, chalcogenides, sulfur, and the like. Examples of the lithium transition metal compound having a polyanion structure other than the lithium transition metal compound include Li₂MnSiO₄, Li₂CoPO₄F, and the like. Examples of the lithium transition metal composite oxide having an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1), Li[LiₓCo₍₁₋ₓ₎]O₂ (0 ≤ x < 0.5), Li[LiₓNi_{γ}Mn_{(1-x-γ)}]O₂ (0 < x < 0.5, 0.6 < (1-γ)), LiNi_{γ}Mn_{(1-γ)}O₂((1-γ) ≤ 0.5), Li[LiₓNi_{γ}Mn_{β}Co_{(1-x-γ-β)}]O₂ (0 < x < 0.5, 0 < γ, 0.6 < β, 0.6 < γ+β < 1), LiNi_{γ}Mn_{β}Co_{(1-γ-β)}]O₂(0 < γ, 0 < β ≤ 0.5), Li[LiₓNi_{γ}Co_{β}Al_{(1-x-γ-β)}]O₂ (0 ≤ x < 0.5, 0 < γ, 0 < β, 0.5 < γ + β < 1), and the like. Examples of the lithium transition metal composite oxide having a spinel-type crystal structure include LiₓMn₂O₄ and LiₓNi_{γ}Mn_{(2-γ)}O₄. Examples of the chalcogenides include a titanium disulfide, a molybdenum disulfide, and a molybdenum dioxide. Some of atoms or polyanions in these materials may be substituted with atoms or anion species composed of other elements. The surfaces of these materials may be coated with other materials.

The positive active material is typically particles (powder). The average particle size of the positive active material is preferably 0.1 µm or more and 20 µm or less, for example. By setting the average particle size of the positive active material to be equal to or more than the lower limit mentioned above, the positive active material is easily manufactured or handled. By setting the average particle size of the positive active material to be equal to or less than the upper limit mentioned above, the electron conductivity of the positive active material layer is improved. In the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflowtype jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive active material layer is preferably 50% by mass or more and 99% by mass or less, more preferably 70% by mass or more and 98% by mass or less, still more preferably 80% by mass or more and 95% by mass or less. When the content of the positive active material falls within the range mentioned above, a balance can be achieved between the increased energy density and productivity of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material carbon black combined with a CNT may be used. Among these, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. By setting the content of the conductive agent to the above range, the energy density of the secondary battery can be increased.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. The content of the binder falls within the range mentioned above, thereby allowing the active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W as a component other than the positive active material, the conductive agent, the binder, the thickener, and the filler.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel, nickelplated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still more preferably 4 µm or more and 25 µm or less, and particularly preferably 5 µm or more and 20 µm or less. By setting the average thickness of the negative substrate to the above range, it is possible to enhance the energy density per volume of a secondary battery while increasing the strength of the negative substrate.

The negative active material layer contains a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The negative active material can be appropriately selected from known negative active materials. As the negative active material for lithium ion secondary battery, a material capable of storing and releasing lithium ions is usually used. Examples of the negative active material include metal Li; metals or metalloids such as Si and Sn; metal oxides or metalloid oxides such as Si oxide, Ti oxide, and Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). Among these materials, graphite and non-graphitic carbon are preferable. In the negative active material layer, one of these materials may be used singly, or two or more of these materials may be mixed and used.

The term "graphite" refers to a carbon material in which the average grid spacing (d₀₀₂) of (002) plane, determined by an X-ray diffraction method before charge-discharge or in a discharged state, is 0.33 nm or more and less than 0.34 nm. Examples of the graphite include natural graphite, and artificial graphite. Artificial graphite is preferable from the viewpoint that a material that has stable physical properties can be obtained.

The term "non-graphitic carbon" refers to a carbon material in which the average grid spacing (d₀₀₂) of (002) plane, determined by an X-ray diffraction method before charge-discharge or in a discharged state, is 0.34 nm or more and 0.42 nm or less. Examples of the non-graphite carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, for use as a working electrode, a negative electrode containing a carbon material as a negative active material, and has metal Li for use as a counter electrode.

The "non-graphitizable carbon" refers to a carbon material in which the d₀₀₂ is 0.36 nm or more and 0.42 nm or less.

The "graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 µm or less. When the negative active material is a carbon material, a titanium-containing oxide, or a polyphosphoric acid compound, the average particle size thereof may be 1 µm or more and 100 µm or less. When the negative active material is Si, Sn, an oxide of Si, an oxide of Sn, or the like, the average particle size thereof may be 1 nm or more and 1 µm or less. By setting the average particle size of the negative active material to be equal to or greater than the above lower limit, the negative active material is easily produced or handled. By setting the average particle size of the negative active material to be equal to or less than the upper limit, the electron conductivity of the negative active material layer is improved. A crusher, a classifier, or the like is used in order to obtain a powder with a predetermined particle size. The crushing method and the powder classification method can be selected from, for example, the methods exemplified for the positive electrode. When the negative active material is a metal such as metal Li, the negative active material may have the form of a foil.

The content of the negative active material in the negative active material layer is preferably 60% by mass or more and 99% by mass or less, more preferably 90% by mass or more and 98% by mass or less. When the content of the negative active material is in the above range, it is possible to achieve both high energy density and productivity of the negative active material layer.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of materials that have a mass loss equal to or less than a predetermined value include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel containing a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. When the polymer gel is used, the effect of suppressing liquid leakage is acquired. As the separator, the polymer gel may be used concurrently with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some hydrogen atoms contained in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. In a case where a cyclic carbonate and a chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these, inorganic lithium salts are preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. When the content of the electrolyte salt is in the above range, it is possible to increase the ionic conductivity of the nonaqueous electrolyte solution.

The nonaqueous electrolyte solution may contain an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less with respect to the mass of the entire nonaqueous electrolyte solution. By setting the content of the additive to the above range, it is possible to improve the capacity retention performance or cycle performance after high-temperature storage, or to further improve the safety.

For the nonaqueous electrolyte, a solid electrolyte may be used, or a nonaqueous electrolyte solution and a solid electrolyte may be used in combination.

The solid electrolyte can be selected from arbitrary materials with ionic conductivity, which are solid at normal temperature (for example, from 15°C to 25°C), such as lithium, sodium and calcium. Examples of the solid electrolyte include a sulfide solid electrolyte, an oxide solid electrolyte, an oxynitride solid electrolyte, and a polymer solid electrolyte.

Examples of the sulfide solid electrolyte include Li₂S-P₂S₅, LiI-Li₂S-P₂S₅, and Li₁₀Ge-P₂S₁₂ in the case of a lithium ion secondary battery.

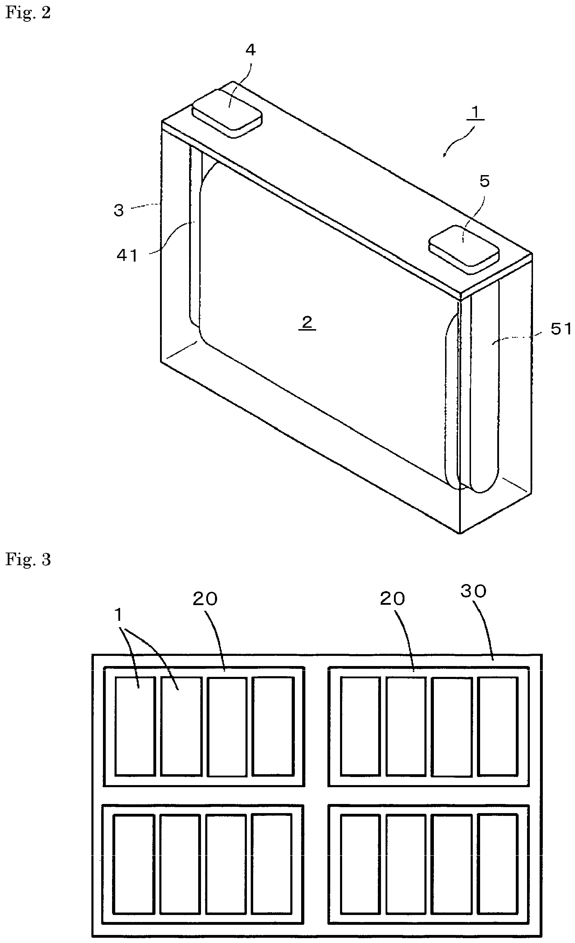

The shape of the nonaqueous electrolyte energy storage device according to the present embodiment is not particularly limited, and examples thereof include cylindrical batteries, prismatic batteries, flat batteries, coin batteries and button batteries. Fig. 2 illustrates a nonaqueous electrolyte energy storage device 1 as an example of prismatic batteries. It is to be noted that Fig. 2 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Configuration of energy storage unit and energy storage apparatus>

The energy storage unit according to this embodiment is formed by connecting in series a plurality of the nonaqueous electrolyte energy storage devices of this embodiment. According to this energy storage unit, it is possible to obtain an energy storage unit in which a rapid voltage rise at the end of charge is suppressed and occurrence of voltage variations in the plurality of nonaqueous electrolyte energy storage devices is suppressed. The energy storage unit of the present embodiment can be mounted on a power source for motor vehicles such as electric vehicles (EV), hybrid vehicles (HEV), and plug-in hybrid vehicles (PHEV), a power source for electronic devices such as personal computers and communication terminals, a power source for power storage, or the like. In this case, the technique of the present invention may be applied to at least two nonaqueous electrolyte energy storage devices included in the energy storage unit. The energy storage unit is preferably formed by connecting in series four nonaqueous electrolyte energy storage devices.

The power storage apparatus according to the present embodiment is formed by connecting a plurality of energy storage units of the present embodiment. According to this energy storage apparatus, it is possible to obtain an energy storage apparatus in which a rapid voltage rise at the end of charge is suppressed and occurrence of voltage variation in the plurality of nonaqueous electrolyte energy storage devices and energy storage unit is suppressed. In this case, the technique of the present invention may be applied to at least two energy storage units included in the energy storage apparatus. Fig. 3 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing the nonaqueous electrolyte energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, followed by sealing the inlet.

### <Other embodiments>

The positive active material for a nonaqueous electrolyte energy storage device, the positive electrode for a nonaqueous electrolyte energy storage device, the nonaqueous electrolyte energy storage device, the energy storage unit, and the energy storage apparatus of the present invention are not limited to the above embodiments, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

In the above embodiment, although the case where the nonaqueous electrolyte energy storage device is used as a nonaqueous electrolyte secondary battery (for example, lithium ion secondary battery) that can be charged and discharged has been described, the type, shape, size, capacity, and the like of the nonaqueous electrolyte energy storage device are arbitrary. The present invention can also be applied to capacitors such as various secondary batteries, electric double layer capacitors, or lithium ion capacitors.

In the embodiment, an electrode assembly in which a positive electrode and a negative electrode are stacked with a separator interposed therebetween has been described, but the electrode assembly may not include a separator. For example, the positive electrode and the negative electrode may be brought into direct contact with each other in a state where a layer not exhibiting conductivity is formed on the active material layer of the positive electrode or negative electrode.

### EXAMPLES

Hereinafter, the present invention will be described more specifically with reference to examples. The present invention is not limited to the following examples.

In the following Examples and Comparative Examples, nonaqueous electrolyte secondary batteries were fabricated as nonaqueous electrolyte energy storage devices, and power performance at a low SOC after charge-discharge cycles was evaluated.

### [Example 1]

### (Preparation of positive active material)

### <Preparation of LiFePO₄>

First, while a 1 mol/dm³ aqueous FeSO₄ aqueous solution was added dropwise at a constant rate to a reaction case containing ion-exchange water, a mixed solution of a 4 mol/dm³ aqueous NaOH solution, a 0.5 mol/dm³ aqueous NH₃ solution, and a 0.5 mol/dm³ aqueous NH₂NH₂ solution was added dropwise so that the pH during that time was maintained at a constant value of 10.0 ± 0.1, thereby preparing an Fe(OH)₂ precursor.

Next, the prepared Fe(OH)₂ precursor was taken out from the reaction case and solid-phase mixed with LiH₂PO₄ and sucrose powder. Then, firing was performed at a firing temperature of 650°C in a nitrogen atmosphere for 5 hours to prepare LiFePO₄ (LFP) having a carbon-coated polyanion structure.

### <Preparation of lithium transition metal composite oxide>

First, while an aqueous solution of a mixture of NiSO₄, CoSO₄, and MnSO₄ at 1 mol/dm³ (an aqueous solution of a mixture of NiSO₄, CoSO₄, and MnSO₄ in which a molar ratio of Ni/Co/Mn is 34/20/46 and the concentration of SO₄ ions is 1 mol/dm³) was added dropwise at a constant rate to a reaction case containing ion-exchanged water, a mixed solution of a 4 mol/dm³ aqueous NaOH solution, a 0.5 mol/dm³ aqueous NH₃ solution, and a 0.5 mol/dm³ aqueous NH₂NH₂ solution was added dropwise so that the pH during that time was maintained at a constant value of 11.0 ± 0.1, thereby preparing a hydroxide precursor in which Ni, Co, and Mn were dispersed in one particle. Next, this precursor was taken out from the reaction case, and subjected to solid-phase mixing so that a ratio of LiOH · H₂O and Li/Me was 1.2 in terms of molar ratio. Then, firing was performed at a firing temperature of 900°C in the air atmosphere, a lithium transition metal composite oxide Li_{1.09}(Ni_{0.34}Co_{0.20}Mn_{0.46})_{0.91}O₂ of Example 1 was prepared.

For the lithium transition metal composite oxide, powder X-ray diffraction measurement was performed using an X-ray diffractometer (manufactured by Rigaku Corporation, model name: MiniFlex II), and it was confirmed to have an α-NaFeO₂-type crystal structure.

### (Fabrication of positive electrode)

A mixture of the LiFePO₄ having a polyanion structure and a lithium transition metal composite oxide Li_{1.09}Ni_{0.31}Co_{0.18}Mn_{0.42}O₂ at a mass ratio of 9: 1 was used as a positive active material, N-methylpyrrolidone (NMP) was used as a dispersion medium, acetylene black was used as a conductive agent, and PVDF was used as a binder. The positive active material, the conductive agent, the binder and the dispersion medium were mixed together. At that time, they are mixed so that a mass ratio of solid components, mixed active material: conductive agent: binder was 90: 5: 5. An appropriate amount of a dispersion medium was added to the mixture to adjust the viscosity, thereby preparing a positive active material composite paste. Next, the positive active material composite paste was applied to both surfaces of an aluminum foil as a positive electrode substrate, leaving an unapplied portion (positive active material layer non-forming portion), dried at 120°C, and roll-pressed to form a positive active material layer on the positive electrode substrate. The amount of the positive active material composite paste applied was set to 10 mg/cm² based on the solid components. In this way, a positive electrode of Example 1 was fabricated.

### (Fabrication of negative electrode)

Graphite was used as a negative active material, SBR was used as a binder, and CMC was used as a thickener. The negative active material, the binder, the thickener, and water as a dispersion medium were mixed together. At that time, they are mixed so that a mass ratio of solid components, active material: binder: thickener was 97: 2: 1. An appropriate amount of water was added to the mixture to adjust the viscosity, thereby preparing a negative composite paste. The negative composite paste was applied to both surfaces of a copper foil as a negative electrode substrate, leaving an unapplied portion (negative active material layer non-forming portion), dried, and roll-pressed to prepare a negative active material layer on the negative electrode substrate. In this way, a negative electrode was fabricated.

### (Preparation of nonaqueous electrolyte)

LiPF₆ was dissolved at a concentration of 1 mol/dm³ in a mixed solvent in which EC and EMC were mixed at a volume ratio of 3 : 7 to prepare a nonaqueous electrolyte.

### (Fabrication of nonaqueous electrolyte secondary battery)

The positive electrode and the negative electrode were stacked with a separator, which was composed of a polyethylene porous membrane substrate and a heat resistant layer formed on the polyethylene porous membrane substrate, interposed therebetween to fabricate an electrode assembly. The heat resistant layer was disposed on the surface facing the positive electrode. The electrode assembly was housed into an aluminum prismatic case, and a positive electrode terminal and a negative electrode terminal were attached. The nonaqueous electrolyte was injected into the prismatic case, and then the inlet was sealed to fabricate a nonaqueous electrolyte secondary battery of Example 1.

### (Measurement of "capacity from 3.5 V to 3.7 V")

A battery capacity (written as "capacity from 3.5 V to 3.7 V") exhibited in a voltage range of 3.5 V or more and 3.7 V or less for the fabricated nonaqueous electrolyte secondary battery was measured by the following method.

In an environment of 25°C, constant current charge was performed at a charge current of 0.1 C until the battery voltage reached 3.7 V, and then constant voltage charge was performed until the current reached 0.05 C while continuously maintaining 3.7 V. In this charge, a charge capacity obtained in the voltage range of 3.5 V to 3.7 V was defined as "capacity from 3.5 V to 3.7 V".

### (Measurement of "25°C low SOC power after cycles")

For the fabricated nonaqueous electrolyte secondary battery, power performance at a low SOC after charge-discharge cycles (written as "25°C low SOC power after cycles") was measured by the following method.

In an environment of 60°C, constant current charge was performed at a charge current of 1.0 C until the voltage reached 3.7 V, and then constant voltage charge was performed at 3.7 V. With regard to the charge termination conditions, charge was performed until the charge current reached 0.05 C. A pause period of 10 minutes was provided after charge, then constant current discharge was performed at a discharge current of 1.0 C until the battery voltage reached 2.0 V, and a pause period of 10 minutes was provided. This was regarded as 1 cycle, and a charge-discharge test of 100 cycles was performed. Thereafter, the battery was transferred to an environment of 25°C, and constant current charge was performed from the discharged state at a charge current of 0.1 C until the SOC reached 25%. After that, the device was discharged in an environment of 25°C at a discharge current of 0.1 C for 10 seconds, a pause time of 10 minutes was provided, and then auxiliary charge was performed at a charge current of 0.1 C for 10 seconds. Similarly, discharge and auxiliary charge were performed at currents of 0.3 C and 0.5 C, and the power was calculated from the battery voltage 10 seconds after the start of discharge at each discharge current, and defined as "25°C low SOC power after cycles".

### [Examples 2 and 3 and Comparative Examples 5]

A lithium transition metal composite oxide Li_{1.20}(Ni_{0.35}Co_{0.07}Mn_{0.58})_{0.80}O₂ of Example 2 was prepared in the same manner as in Example 1 except that in the step of preparing a hydroxide precursor, the molar ratio of Ni/Co/Mn in the aqueous solution of the mixture was changed to 35/7/58, and this hydroxide precursor was solid-phase mixed so that the ratio of LiOH · H₂O and Li/Me was 1.5 in terms of molar ratio.

A lithium transition metal composite oxide Li_{1.12}(Ni_{0.45}Co_{0.15}Mn_{0.40})_{0.88}O₂ of Example 3 was prepared in the same manner as in Example 1 except that in the step of preparing a hydroxide precursor, the molar ratio of Ni/Co/Mn in the aqueous solution of the mixture was changed to 45/15/40, and this hydroxide precursor was solid-phase mixed so that the ratio of LiOH · H₂O and Li/Me was 1.3 in terms of molar ratio.

A lithium transition metal composite oxide Li_{1.25}(Ni_{0.30}Co_{0.05}Mn_{0.65})_{0.75}O₂ of Comparative Example 5 was prepared in the same manner as in Example 1 except that in the step of preparing a hydroxide precursor, the molar ratio of Ni/Co/Mn in the aqueous solution of the mixture was changed to 30/5/65, and this hydroxide precursor was solid-phase mixed so that the ratio of LiOH · H₂O and Li/Me was 1.7 in terms of molar ratio.

It was confirmed that the lithium transition metal composite oxide had an α-NaFeO₂-type crystal structure as in the case of Example 1.

Positive electrodes according to Example 2, Example 3, and Comparative Example 5 were fabricated in the same manner as in Example 1 except that Li_{1.20}(Ni_{0.35}Co_{0.07}Mn_{0.58})_{0.80}O₂, Li_{1.12}(Ni_{0.45}Co_{0.15}Mn_{0.40})_{0.88}O₂, or Li_{1.25}(Ni_{0.30}Co_{0.05}Mn_{0.65})_{0.75}O₂ prepared as described above was used as a lithium transition metal composite oxide to be mixed with LiFePO₄, and nonaqueous electrolyte secondary batteries including the positive electrode were fabricated.

### [Comparative Examples 1 to 4]

Positive electrodes according to Comparative Examples 1 to 4 were fabricated in the same manner as in Example 1 except that LiNi_{1/3}Co_{1/3}Mm_{1/3}O₂(NCM111), LiNi_{0.5}Co_{0.2}Mn_{0.3}O₂(NCM523), LiNi_{0.6}Co_{0.2}Mn_{0.2}O₂(NCM622), or LiNi_{0.8}Co_{0.1}Mn_{0.1}O₂(NCM811) was used as a lithium transition metal composite oxide to be mixed with LiFePO₄, and nonaqueous electrolyte secondary batteries including the positive electrode were fabricated.

For the nonaqueous electrolyte secondary batteries according to Examples 1 to 3 and Comparative Examples 1 to 5, the results of obtaining "capacity from 3.5 V to 3.7 V" and "25°C low SOC power after cycles" by the above method are shown in Table 1 together with the composition of the positive active materials.

**[Table 1]**

| | Type of lithium transition metal composite oxide mixed with LiFePO₄ | Capacity from 3.5 V to 3.7 V [mAh] | 25°C low SOC power after cycles [W] |
|---|---|---|---|
| Example 1 | Li_{1.09}(Ni_{0.34}Co_{0.20}Mn_{0.46})_{0.91}O₂ | 22 | 5.4 |
| Example 2 | Li_{0.20}(Ni_{0.35}Co_{0.07}Mn_{0.58})_{0.80}O₂ | 21 | 5.1 |
| Example 3 | Li_{1.12}(Ni_{0.45}Co_{0.15}Mn_{0.40})_{0.88}O₂ | 20 | 5.5 |
| Comparative Example 1 | NCM111 | 20 | 1.9 |
| Comparative Example 2 | NCM523 | 28 | 1.7 |
| Comparative Example 3 | NCM622 | 32 | 1.6 |
| Comparative Example 4 | NCM811 | 37 | 1.5 |
| Comparative Example 5 | Li_{1.25}(Ni_{0.30}Co_{0.05}Mn_{0.65})_{0.75}O₂ | 12 | 4.4 |

From Table 1, it is found that in the nonaqueous electrolyte secondary batteries of Examples 1 to 3 using the positive active material containing the lithium transition metal compound (LiFePO₄) having a polyanion structure and the lithium transition metal composite oxide represented by the general formula Li_{1+α}Me_{1-α}O₂ (0 < α, Me is Ni and Mn, or a transition metal element including Ni, Mn, and Co, 0.4 ≤ Mn/Me < 0.6), the "capacity from 3.5 V to 3.7 V" is exhibited, and the "25°C low SOC power after cycles" is large.

Meanwhile, in the nonaqueous electrolyte secondary batteries of Comparative Examples 1 to 4 using the positive active material containing LiFePO₄ and NCM, the "capacity from 3.5 V to 3.7 V" was large, but the "25°C low SOC power after cycles" was small.

On the other hand, in the nonaqueous electrolyte secondary battery of Comparative Example 5 using a positive active material in which a lithium transition metal composite oxide represented by the general formula Li_{1+α}Me_{1-α}O₂ (0 < α, Me is Ni and Mn, or a transition metal element including Ni, Mn, and Co) in which the molar ratio of Mn to the transition metal (Me) was more than 0.6 was mixed with LiFePO₄, the "capacity from 3.5 V to 3.7 V" was reduced, the effect of suppressing a rapid voltage increase by using LiFePO₄ as a positive active material was small, and the "25°C low SOC power after cycles" was not also sufficiently increased.

Therefore, from the viewpoint of this example, it can be said that by using a positive active material containing a lithium transition metal compound having a polyanion structure and represented by the general formula LiMPO₄ (M is one or more elements selected from Fe, Mn, Ni, and Co) or Li₃V₂(PO₄)₃ and a lithium transition metal composite oxide having an α-NaFeO₂-type crystal structure and represented by the general formula Li_{1+α}Me_{1-α}O₂ (0 < α, Me is Ni and Mn, or a transition metal element including Ni, Mn, and Co, 0.4 ≤ Mn/Me ≤ 0.6) for a positive electrode, a nonaqueous electrolyte energy storage device having high power performance at a low SOC after charge-discharge cycles can be obtained.

### INDUSTRIAL APPLICABILITY

By using the positive active material according to one aspect of the present invention, it is possible to provide a nonaqueous electrolyte energy storage device having high power performance at a low SOC after charge-discharge cycles, and thus the nonaqueous electrolyte energy storage device is useful as a nonaqueous electrolyte energy storage device for hybrid vehicles, plug-in hybrid vehicles and electric vehicles.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A positive active material for a nonaqueous electrolyte energy storage device, comprising: a lithium transition metal compound having a polyanion structure and represented by a general formula LiMPO₄ (M is one or more elements selected from Fe, Mn, Ni, and Co) or Li₃V₂(PO₄)₃; and a lithium transition metal composite oxide having an α-NaFeO₂ type crystal structure and represented by a general formula Li_{1+α}Me_{1-α}O₂ (0 < α, Me is Ni and Mn, or a transition metal element including Ni, Mn, and Co), the lithium transition metal composite oxide having a molar ratio of Mn to the transition metal (Me) of 0.4 ≤ Mn/Me ≤ 0.6.

2. The positive active material for a nonaqueous electrolyte energy storage device according to claim 1, wherein when the positive electrode including the lithium transition metal compound as a positive active material is charged so that a positive electrode potential reaches 3.7 V (vs. Li/Li⁺), a region where a potential change with respect to an amount of charge is relatively flat is observed within a positive electrode potential range of 3.2 V (vs. Li/Li⁺) or more and less than 3.4 V (vs. Li/Li⁺).

3. The positive active material for a nonaqueous electrolyte energy storage device according to claim 1 or 2, wherein the lithium transition metal composite oxide has a molar ratio (1 + α)/(1 - α) of Li to the transition metal (Me) of 1.1 ≤ (1 + α)/(1 - α).

4. The positive active material for a nonaqueous electrolyte energy storage device according to any one of claims 1 to 3, wherein the lithium transition metal composite oxide has a molar ratio (1 + α)/(1 - α) of Li to the transition metal (Me) of (1 + α)/(1 - α) ≤ 1.3.

5. The positive active material for a nonaqueous electrolyte energy storage device according to any one of claims 1 to 4, wherein a ratio of the lithium transition metal composite oxide in the positive active material is 20% by mass or less.

6. A positive electrode for a nonaqueous electrolyte energy storage device comprising the positive active material according to any one of claims 1 to 5.

7. A nonaqueous electrolyte energy storage device comprising the positive electrode according to claim 6.

8. The nonaqueous electrolyte energy storage device according to claim 7, wherein when the positive electrode is charged so that a positive electrode potential reaches 3.7 V (vs. Li/Li⁺), a region where a potential change with respect to an amount of charge is relatively flat is observed within a positive electrode potential range of 3.2 V (vs. Li/Li⁺) or more and 3.7 V (vs. Li/Li⁺) or less.

9. The nonaqueous electrolyte energy storage device according to claim 8, wherein the energy storage device is used at a voltage at which a maximum achieved potential of the positive electrode in a fully charged state (SOC 100%) is 3.7 V (vs. Li/Li⁺) or less.

10. An energy storage unit formed by connecting in series a plurality of the nonaqueous electrolyte energy storage devices according to any one of claims 7 to 9.

11. An energy storage apparatus formed by connecting a plurality of the energy storage units according to claim 10.
